# EUROPEAN PATENT SPECIFICATION

(11) **EP 3 260 649 B1**
(45) Date of publication and mention of the grant of the patent: **18.12.2019**
(21) Application number: 16382287.7
(22) Date of filing: 21.06.2016
(51) Int. Cl.: E21B 17/042

(54) **THREADED JOINT FOR OIL AND GAS PIPES**
GEWINDEVERBINDUNG FÜR ÖL- UND GASROHRE
JOINT FILETÉ POUR TUYAUX D'HUILE ET DE GAZ

(43) Date of publication of application: 27.12.2017
(73) Proprietor: Energy Frontier Solutions S.L., 08172 Sant Cugat del Valles, Barcelona (ES)
(72) Inventor: VAN HELVOIRT, Robbert, 5211PM 's-Hertogenbosch (NL)
(74) Representative: Balder IP Law, S.L.

(56) References cited:
- WO-A1-2004/079246
- WO-A1-2009/083523
- WO-A1-2010/047406
- CA-A1- 2 921 411
- CN-A- 103 362 455
- CN-U- 202 673 174
- DE-C1- 4 446 806
- US-A- 3 870 351
- US-A1- 2007 102 927
- US-A1- 2010 270 793

## Description

### TECHNICAL FIELD

The present invention relates to threaded joints for oil and gas pipes, of the type comprising a threaded female part and a male threaded part, for example a pin and box or premium connection, specially designed for operating in severe conditions, both in external and internal pressure terms, and which are better known as premium joints.

### STATE OF THE ART

Premium joints comprise a pin and a box provided with tapered threads which allow fastening them by providing a seal surface in mutually cooperating tapered surfaces where a seal is created and which comprise a pin nose abutting on a shoulder of the box which acts as a stopper in the connection.

The seal is formed by a metal-to-metal intimate contact that has to withstand both external and internal pressures, axial loads and bending.

WO 2004/109173, US 2011/0241340 and US 2015/0001841 disclose the main features of these premium joints.

The details of the coupling, particularly the design of the surfaces that create the seal during the connection, is critical, because it must guarantee a total tightness in all conditions, namely internal and external pressure, tension and compression, bending and all of them at all operational temperatures.

For this reason, the more recent documents describe very specific solutions based on different designs of the surfaces of the pin and the box to create a seal.

US 2011/0241340 describes several solutions based on cone to cone joints and unions based on a rounded section in one of the parts, pin or box, and cylindrical in the other one. In Figures 3A to 3D of this document contours of the sealing surface of the box formed by alternating conical and curved surfaces are described. In Figures 4 and 5 the resulting sealing joints are shown. All these combinations are intended to form a single joint, destined to withstand on its proximal and distal sides the external pressure and the internal pressure respectively. In the context of the present invention, distal refers to the parts that are closest to the pin nose (or the shoulder) and proximal refers to those who are farthest from the pin nose, i.e. those parts that are closer to the thread.

Premium joints comprising two sealing surfaces instead of one have been disclosed too.

Some of these solutions have one of the seals in the tapered zone of the pin and the box and another seal in the longitudinal bearing surface, i.e. in the shoulder / pin nose region.

Other double seal solutions have both seals in the tapered regions, solutions in which the shoulder area has only a support function. The present invention belongs to this sort of solutions.

An example of these double seals is described in DE4446806C1, which is considered the closest prior art for the present invention.

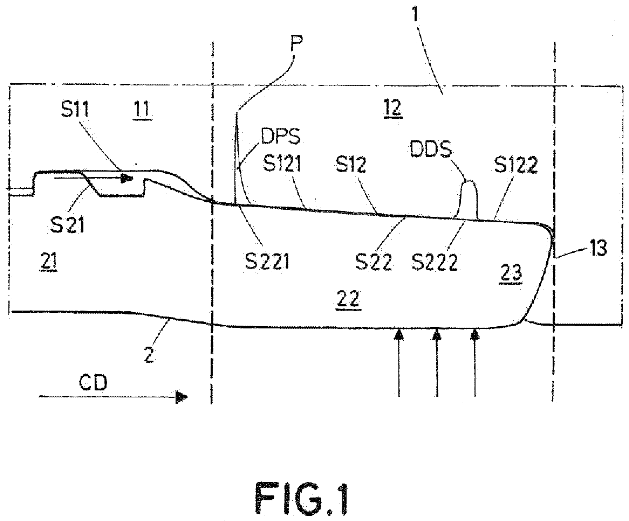

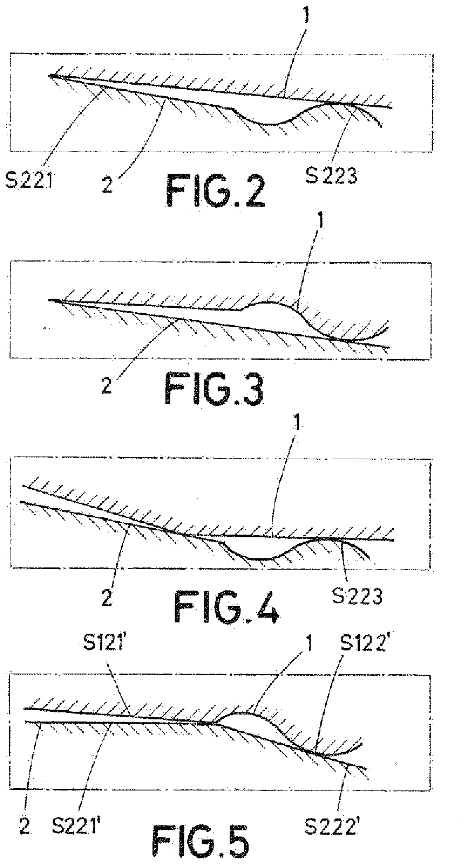

In particular in FIG. 1 of DE4446806C1 a double seal based on two rounded sections to cone surface is shown. Fig. 3 shows another double seal, wherein the proximal seal is a rounded section to cone seal and the distal seal is a cone to cone seal.

While the seal is guaranteed in two zones, it is not an optimal solution, since the two seals are identical and do not consider that they are facing different conditions. The distal seal is intended to ensure sealing against internal pressure, while the proximal seal is designed to ensure tightness against external pressures. A major difference in the effect of the internal and the external pressure is that the internal pressure improves the sealing, since it tends to expand the pin nose, that is, it has a self-sealing effect.

Moreover, if the two seals are of the same type, and it is desired to increase tightness on one side with respect to the other one, this may ensure an adequate tightness but one of the seals will be overstressed, condition that may accelerate the galling of the contact surfaces, which is another process to avoid.

Another aspect not optimal in the prior art solutions is that the coupling process must ensure an effective coupling and the correct formation of the double seal in all the joints of the entire pipe. The coupling process involves a relative displacement between pin and box whose outcome may depend on the conditions under which the coupling is performed.

The present invention also aims to ensure that the seals are formed in a short relative course between pin and box and that the stress profiles are identical for different joints.

WO 2010/047406 A1 discloses a threaded joint for oil or gas pipes, the joint comprising a female part and a male part, wherein a coupling direction between the male part and the female part and a coupling configuration are defined, wherein the female part is a joint tubular body comprising a coupling section which internal surface is threaded, a seal section which prolongs the coupling section in the coupling direction with a decreasing section in the coupling direction, the seal section having an internal sealing surface and a shoulder at the end of the seal section for bearing an end of the male part in the coupling configuration and wherein the male part comprises a tubular body which comprises a first section which external surface is threaded and which is complementary to the threaded internal surface of the female part, a second sealing section comprising a seal surface which in the coupling configuration cooperates with the seal surface of the female part for sealing the joint, and wherein the sealing surface is made of convex and conical portions.

### DESCRIPTION OF THE INVENTION

- For overcoming the state of the art drawbacks, the present invention proposes a threaded joint for oil or gas pipes according to claim 1 or claim 9.

Throughout the description, the proximal seal means the seal closest to the thread, and the distal seal means the seal that is arranged closer to the shoulder.

This arrangement provides good sealing capacities during assembly as the contact stresses complement each other providing optimum seal contact length when fully made up. The stresses around the conical seal during initial contact to the sealing position increase at much higher rate when compared to stresses at the convex surface.

In particular, this configuration provides an asymmetrical configuration of a double seal arrangement, which in turn provides for withstanding both the external pressure and the internal pressure, the external pressure being the pressure coming from the gap between the threads, the internal pressure being the pressure coming from the interior of the pipe/ duct.

It is known that the connections ability to seal for various conditions is a function of seal stress and contact length. The combination of low contact area/ high stress (conical) and high contact area/ low stress (toroidal) during make up reduces the risk of galling whilst providing sufficient strain energy in each seal for the various loading combinations. The peak conical stress resulting from the cone-cone seal prevents ingress from external pressure whilst the design reduces the risk of loads induced from the wedge effect. The seal design and location also provides maximum strain energy during the most difficult combinations such as tension with external pressure.

There is no need for high convex seal stress because the internal pressure assists the sealing contact pressures. Although the stresses at the convex or toroidal seal are considerably lower when compared to the conical seal the seal contact pressures are assisted by internal pressure acting on the male part end.

Therefore, the seal design stress concentrations, contact area and locations are optimized to withstand galling and for any load conditions.

In some embodiments, the aperture angle of the conical surface of the proximal section portion of the male part and the aperture angle of the proximal conical section of the female part are different.

In some embodiments, the angle of the conical surface of the proximal section portion is greater than the angle of the proximal conical section of the female part.

Other embodiments include arrangements wherein the angle of the conical surface of the proximal section portion is lower than the angle of the proximal conical section of the female part.

In some particular embodiments, the angle formed by the generatrix and the axis of the cone section of the female part is comprised between 10° and 20° and the angle formed by the generatrix and the axis of the cone section of the proximal section of the male part is comprised between 10° and 20°.

In some embodiments, the conical sections of the sealing surface of the female part belong to the same cone section, and therefore have the same angle.

In some embodiments, the conical sections of the sealing surface of the female part have a different angle.

In some embodiments, the convex surface is a toroid section and preferably the radius of a circle which generates the toroid section is comprised between 45 and 70 cm, and is preferably of 50 cm.

The invention also relates to a threaded joint for oil and gas pipes, the joint comprising a female part and a pin, wherein a coupling direction between the male part and the female part and a coupling configuration are defined, wherein the female part is a joint tubular body comprising a coupling section which internal surface is threaded, a seal section which prolongs the coupling section in the coupling direction with a decreasing section in the coupling direction, the seal section having an internal sealing surface and a shoulder at the end of the seal section for bearing a end of the male part in the coupling configuration and wherein the male part comprises a tubular body which comprises a first section which external surface is threaded and which is complementary to the threaded internal surface of the female part, a second sealing section comprising a seal surface which in the coupling configuration cooperates with the seal surface of the female part for sealing the joint, and wherein:
- the seal surface of the male part is made of a proximal conical section closer to the thread, and a distal section closer to the male part end;
- the internal sealing surface of the female part comprises two portions, a proximal section portion closer to the thread and a distal section portion closer to the shoulder;
- the proximal section portion of the female part being a conical surface which forms, in the coupling configuration, a first seal with the proximal conical section of the pin;
- the distal section portion having a convex surface which forms, in the coupling configuration, a second seal with the distal section of the pin.

It is a second alternative to the configuration described above, but wherein the convex surface has a reversed position, which is now in the female part instead of the pin. The advantages are the same as for the inventive concept described above.

In some embodiments of this second alternative:
- the angle of the conical surface of the proximal conical section of the male part and the angle of the proximal section portion of the female part are different and preferably the angle of the conical surface of the proximal section portion of the female part is greater than the angle of the proximal conical section of the pin; or
- the conical sections of the sealing surface of the male part belong to the same cone section.

For all the embodiments disclosed, it is preferred that the shoulder has a rounded section, the convex surface belonging to the pin. Due to machining reasons a straight negative shoulder angle could be considered as well.

With a shoulder with a rounded section or a negative straight section or a step, the male part is better supported during external pressure.

Finally, in specially preferred embodiments, the female part and the male part are respectively the box and the pin of a premium connection. In other embodiments, the male and the female parts belong to a flush type connection.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the inventive joint can be carried out. The drawings comprise the following figures:
Figure 1 is a section showing the different parts of the inventive premium connection according to a preferred embodiment.
Figure 2 shows very schematically the double seal connection according to the most preferred embodiment.
Figure 3 shows an embodiment wherein the rounded surface is placed in the box and wherein all the pin seal surfaces are conical.
Figures 4 and 5 show embodiments wherein the part, pin or box, having conical surfaces have two different sections with different cone apertures.

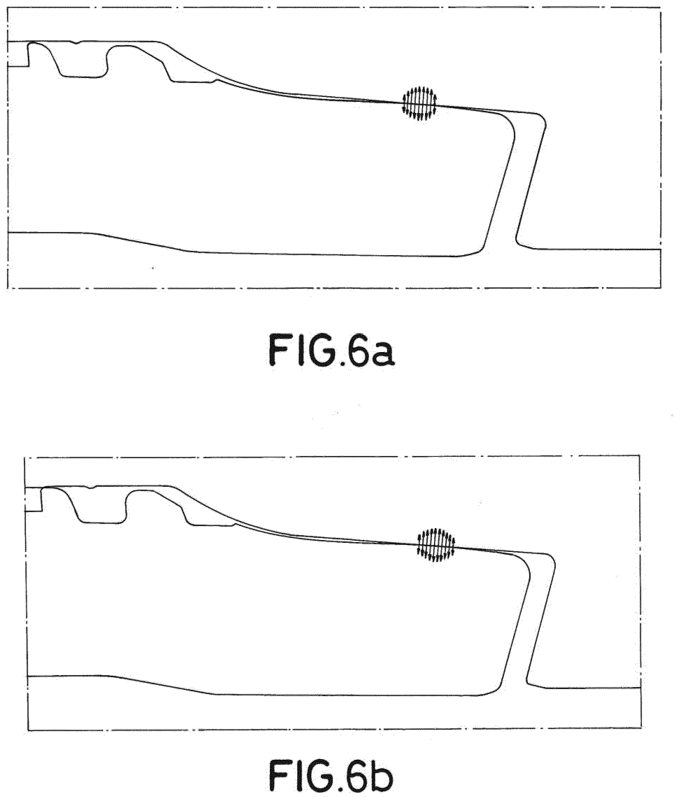

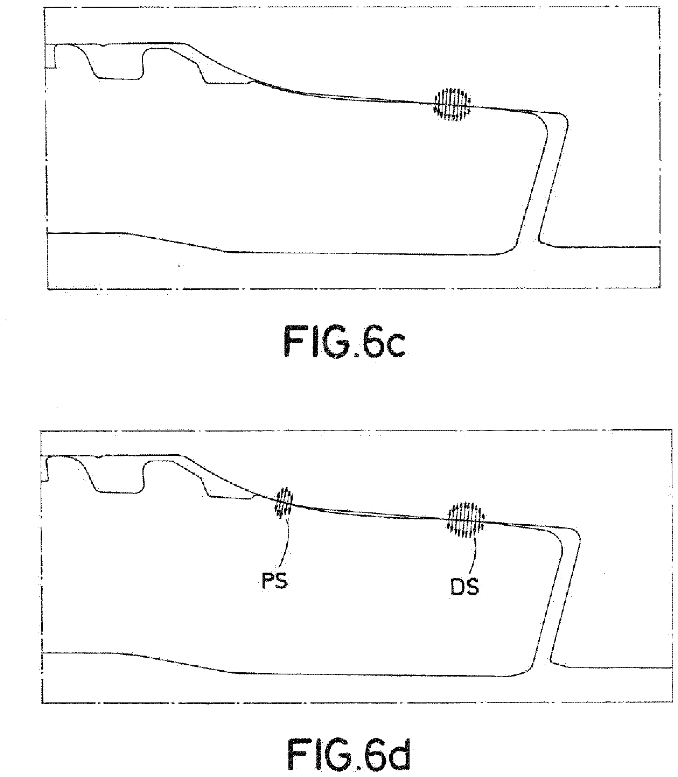

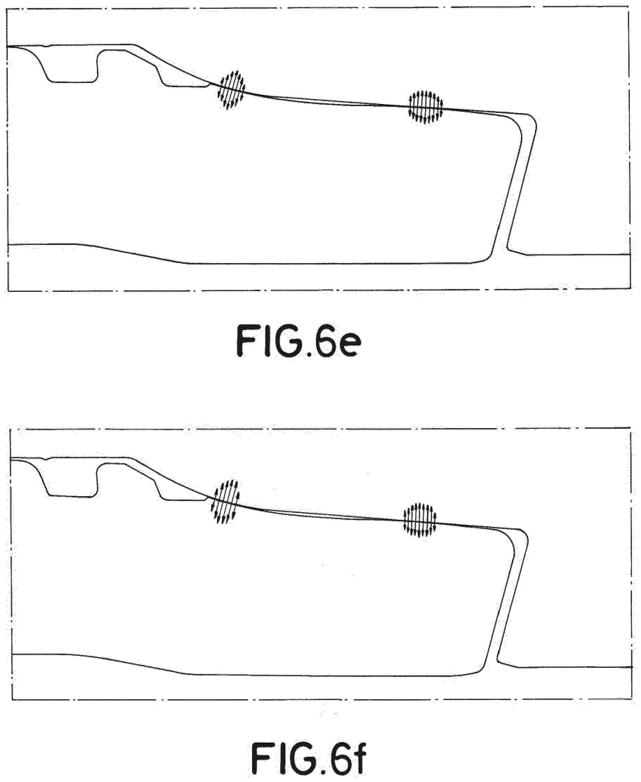

Figures 6a to 6h show how the seals are approximately behaving during make-up of the premium connection.

### DESCRIPTION OF A WAY OF CARRYING OUT THE INVENTION

As shown in FIG. 1, and according to a preferred embodiment the present invention relates to a threaded joint for oil and gas pipes which comprises a box 1 and a pin 2. Although in the present section reference is made to a pin and box joint, the invention can obviously be applied to a flush joint, that is, a joint where one end a pipe element comprises a threaded female part, whereas the other end comprises a threaded male part, such that it can be screwed in the next element.

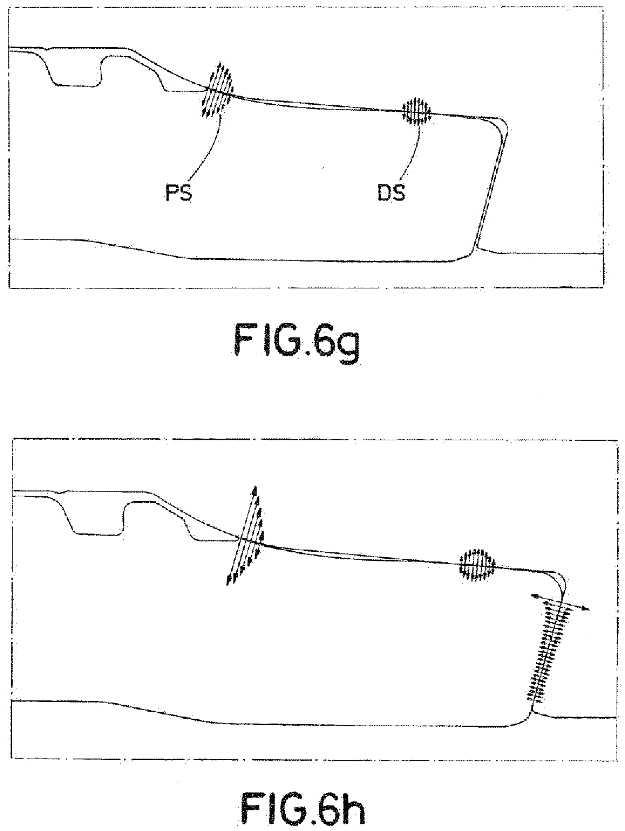

A coupling direction CD between the pin 2 and the box 1 and a coupling configuration are defined. The coupling configuration is shown in FIG. 1 to FIG. 5 and in FIG. 6h. The other figures show the coupling course.

The box 1 is a joint tubular body comprising a coupling section 11 which internal surface S11 is threaded.

A seal section 12 prolongs the coupling section 11 in the coupling direction. This seal section 12 has a decreasing section in the coupling direction.

The seal section 12 has an internal sealing surface S12 and a shoulder 13 at the end of the seal section 12 for bearing a nose 23 (or end) of the pin 2 in the coupling configuration.

The pin 2 comprises a tubular body which comprises a first section 21 which external surface S21 is threaded and which is complementary to the threaded internal sealing surface S11 of the box 1 and a second sealing section 22 comprising a seal surface S22 which in the coupling configuration cooperates with the internal sealing surface S12 of the box 1 for sealing the joint.

According to the invention:
- the internal sealing surface S12 of the box 1 is made of conical sections S121, S122;
- the seal surface S22 of the pin 2 comprises two portions S221, S222, a proximal portion S221 closer to the first section 21 and a distal portion S222 closer to the nose 23;
- the proximal portion S221 is a conical surface which forms, in the coupling configuration, a first seal PS (see FIG. 6g) with the internal sealing surface S12 of the box 1;and
- the distal portion S222 has a convex surface S223 which forms, in the coupling configuration, a second seal DS (see FIG. 6g) with the internal sealing surface S12 of the box 1.

As shown in FIG. 1, 2 and FIGS. 6a to 6h and according to a preferred embodiment, the angle of the conical surface of the proximal portion S221 of the pin is greater than the angle of the proximal conical section S121 of the box. Also it can be seen that according to this preferred embodiment the cone surfaces S121, S122 of the box 2 have the same angles. This is also shown in the sketch of figure 2, which relative dimensions have been exaggerated to show the qualitative geometric aspects of the seals PS, DS.

FIG. 1 also shows the spatial stress profile of the seals. The stress profile is the function representing the stress vs the position along the line that generates the sealing surface. The stress profile of the proximal seal has the reference DPS, and the stress profile of the distal seal has the reference DDS. The proximal seal has a peak P adjacent to the thread zone, this peak P being a maximum in the stress profile (see FIG. 1), and therefore serves as a barrier for withstanding external pressures, whereas the distal seal is symmetrical and has a lower maximum pressure. FIG. 6h further shows the stress profile created in the shoulder 13, 23.

In the embodiments shown, the angle formed by the generatrix and the axis of the cone section of the box is comprised between 10° and 20° and the angle formed by the generatrix and the axis of the cone section of the proximal portion S221 of the pin 2 is comprised between 10° and 20°.

Now some particular cases will be disclosed with reference to FIGS 2 to 5.

### The conical section of the box is a single tapered zone

In this case, shown in FIG. 1, the conical sections S121, S122 of the internal sealing surface S12 of the box 1 belong to the same cone section, and therefore have the same angle.

Having a single tapered zone in the box involves two major advantages.
1. Manufacturing is fairly simple.
2. The gauging of the box tapered zone is simple.

### The box has two different tapered zones with different angles

In this case, shown in FIG. 4, the conical sections S121, S122 of the sealing surface S12 of the box 1 have a different angle.

With the use of 2 different angles, there can be a better optimization of the seal contact area and contact pressure.

### The convex surface is located in the box instead of the pin

As shown in FIGS. 3 and 5, other embodiments consist in swapping the location of the convex/ toroidal surface between the pin 2 and the box 1. Although these alternatives are minor from a fabrication point of view, the effect of the location of two different seals is the same that in the preferred embodiment disclosed above.

### Simulation of the buildup of the seals

Now the manner in which the seals are formed in the coupling process will be described with reference to Figures 6a to 6h. The advantageous effects provided by the features according to the preferred embodiment will be described as well.

In particular, these figures show the stress profiles formed in the two substantially annular bands constituting the proximal seal SP, i.e. the seal closest to the thread, and the distal seal SD, i.e. the seal that is arranged closer to the shoulder 13, 23.

At the time of the first contact between pin 2 and box 1, the distal seal SD begins to form. As shown, the reaction stresses that appear between the convex curved surface S223 of the pin nose 23 and the distal (tapered) surface S122 of the box 1 create a stress profile which is symmetrical along an axis substantially perpendicular to the contact surface. As can be seen along the entire coupling course, this profile is very stable and keeps both its magnitude and its symmetry during the introduction.

However, the cone-cone contact corresponding to the proximal seal has a different evolution and a different profile than those of the distal seal DS. In particular, the proximal seal only shows up from the moment shown in figure 6d.

It is pointed out that figures 6a to 6h are successive positions at approximately regular intervals.

The rise of the stresses in the proximal seal is due to the cone-cone contact and to the fact that the contact surfaces of the pin 2 and the box 1 are inclined relative to the axis of introduction, i.e. the traveling direction of the surfaces.

At the end of the process of forming the proximal seal PS, it can be appreciated that the stress diagram as a function of the position is biased towards the thread, that is, the diagram is asymmetrical, the major stresses being greater in the thread side, where the pressures tend to be greater.

Therefore, the asymmetry provided by the invention allows to concentrate the high stresses where they are needed, thus providing a better tightness and reduced galling during make up with respect to the prior art solutions.

Moreover, the diagrams stress show that the simultaneous achievement of the two seals is easy to control, because one of them is formed throughout the introduction course with little variation, while the other, the proximal seal PS, is formed in an interval which necessarily overlaps with the formation of the distal seal DS, and which peak is created when the pin nose abuts on the shoulder.

Finally, it has to be pointed out that in spite of the built-up displacement being very short, the displacement caused by a traction in the uncoupling direction can be made even shorter by adjusting correctly the thread tolerances, thus ensuring that under all loading conditions both seals will be effective.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.
the pin nose abuts on the shoulder.

Finally, it has to be pointed out that in spite of the built-up displacement being very short, the displacement caused by a traction in the uncoupling direction can be made even shorter by adjusting correctly the thread tolerances, thus ensuring that under all loading conditions both seals will be effective.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Threaded joint for oil and gas pipes, the joint comprising a female part (1) and a male part (2), wherein a coupling direction (CD) between the male part (2) and the female part (1) and a coupling configuration are defined, the male part having a nose (23), wherein the female part (1) is a joint tubular body comprising a coupling section (11) which internal surface (S11) is threaded, the axis of the tubular body having the coupling direction (CD), a seal section (12) which prolongs the coupling section (11) in the coupling direction with a decreasing diameter in the coupling direction, the seal section (12) having an internal sealing surface (S12) and a shoulder (13) at the end of the seal section (12) for abutting the nose (23) of the male part (2) in the coupling configuration and wherein the male part (2) comprises a tubular body which comprises a first section (21) which external surface (S21) is threaded and which is complementary to the threaded internal surface (S11) of the female part (1), a second sealing section (22) comprising a seal surface (S22) which in the coupling configuration cooperates with the seal surface (S12) of the female part (1) for sealing the joint, wherein,
- the internal sealing surface (S12) of the female part (1) is made of conical sections (S121, S122);
- the seal surface (S22) of the male part (2) comprises a proximal portion (S221) closer to the first section (21) and a distal portion (S222) closer to the end (23);
- the proximal portion (S221) having a conical surface which forms, in the coupling configuration, a first seal (PS) with one of the conical sections (S121) of the internal sealing surface (S12) of the female part (1);
- the distal portion (S222) having a convex surface (S223) which forms, in the coupling configuration, a second seal (DS) with the other conical section (S122) of the internal sealing surface (S12) of the female part (1);
- such that in the coupling configuration a double seal formed by the first seal (PS) and the second seal (DS) is established, the first seal (PS) being a cone to cone seal that can prevent ingress from external pressure, the second seal (DS) being a convex to cone seal that reduces the galling.

2. Threaded joint according to claim 1, wherein the aperture angle of the conical surface of the proximal portion (S221) of the male part and the aperture angle of a proximal conical section (S121) of the female part are different.

3. Threaded joint according to claim 2, wherein the angle of the conical surface of the proximal portion (S221) is greater than the angle of the proximal conical section (S121) of the female part.

4. Threaded joint according to claim 3, wherein the angle formed by the generatrix and the axis of the cone section of the female part (1) is comprised between 10° and 20° and the angle formed by the generatrix and the axis of the cone section of the proximal portion (S221) of the male part (2) is comprised between 10° and 20°.

5. Threaded joint according to any of the previous claims, wherein the conical sections (S121, S122) of the sealing surface (S12) of the female part (1) belong to the same cone

6. Threaded joint according to any of claims 1 to 4, wherein the conical sections (S121, S122) of the sealing surface (S12) of the female part (1) have a different angle.

7. Threaded joint according to any of the previous claims, wherein the convex surface (S223) is a toroid section.

8. Threaded joint according to claim 7, wherein the radius of a circle which generates the toroid section is comprised between 45 and 70 cm, and is preferably of 50 cm.

9. Threaded joint for oil and gas pipes, the joint comprising a female part (1) and a male part (2), wherein a coupling direction between the male part (2) and the female part (1) and a coupling configuration are defined, the male part having a nose (23), wherein the female part (1) is a joint tubular body comprising a coupling section (11) which internal surface (S11) is threaded, the axis of the tubular body having the coupling direction (CD), a seal section (12) which prolongs the coupling section (11) in the coupling direction with a decreasing diameter in the coupling direction, the seal section (12) having an internal sealing surface (S12) and a shoulder (13) at the end of the seal section (12) for abutting the nose (23) of the male part (2) in the coupling configuration and wherein the male part (2) comprises a tubular body which comprises a first section (21) which external surface (S21) is threaded and which is complementary to the threaded internal surface (S11) of the female part (1), a second sealing section (22) comprising a seal surface (S22) which in the coupling configuration cooperates with the seal surface (S12) of the female part (2) for sealing the joint, the nose (23) which in the coupling configuration abuts on the shoulder (13), wherein,
- the seal surface (S22) of the male part (2) is made of a proximal conical section (S221') closer to the thread, and a distal section (S222') closer to the male part nose (23);
- the internal sealing surface (S12) of the female part (1) comprises a proximal section portion (S121') closer to the thread and a distal section portion (S122') closer to the shoulder (13);
- the proximal section portion (S121') of the female part (1) being a conical surface which forms, in the coupling configuration, a first seal with the proximal conical section (S221') of the male part (2);
- the distal section portion of the female part (S122') having a convex surface (S223) which forms, in the coupling configuration, a second seal (DS) with the distal section (S222') of the male part (2);
- such that in the coupling configuration a double seal formed by the first seal (PS) and the second seal (DS) is established, the first seal (PS) being a cone to cone seal that can prevent ingress from external pressure, the second seal (DS) being a convex to cone seal that reduces the galling.

10. Threaded joint according to claim 9, wherein the angle of the conical surface of the proximal conical section (S221') of the male part and the angle of the proximal section portion (S121') of the female part are different.

11. Threaded joint according to claim 10, wherein the angle of the conical surface of the proximal section portion (S121') of the female part is greater than the angle of the proximal conical section (S221') of the male part (2).

12. Threaded joint according to claim 9 or claim 10, wherein the conical sections (S221', S222') of the sealing surface (S22) of the male part (2) belong to the same cone.

13. Threaded joint according to any of claims 9 to 12, wherein the convex surface (S223) is a toroid section.

14. Threaded joint according to any of the previous claims, wherein the shoulder (13) has a rounded section, a straight section or a stepped section.

15. Threaded joint according to any of the previous claims, wherein the female part (1) and the male part (2) are respectively the box (1) and the pin (2) of a premium connection.

16. Oil or gas pipe comprising joints according to any of previous claims.

## Patentansprüche

1. Gewindeverbindung für Öl- und Gasleitungen, wobei die Verbindung einen weiblichen Teil (1) und einen männlichen Teil (2) umfasst, wobei eine Kupplungsrichtung (CD) zwischen dem männlichen Teil (2) und dem weiblichen Teil (1) und eine Kupplungskonfiguration definiert sind, wobei der männliche Teil eine Nase (23) aufweist, wobei der weibliche Teil (1) ein rohrförmiger Verbindungskörper ist, der einen Kupplungsabschnitt (11) umfasst, dessen Innenfläche (S11) mit einem Gewinde versehen ist, wobei die Achse des rohrförmigen Körpers die Kupplungsrichtung (CD) aufweist, einen Dichtungsabschnitt (12), der den Kupplungsabschnitt (11) in Kupplungsrichtung mit einem in Kupplungsrichtung abnehmenden Durchmesser verlängert, wobei der Dichtungsabschnitt (12) eine innere Dichtfläche (S12) und eine Schulter (13) am Ende des Dichtungsabschnitts (12) zum Anschlagen an die Nase (23) des männlichen Teils (2) in der Kupplungskonfiguration aufweist und wobei der männliche Teil (2) einen rohrförmigen Körper umfasst, der einen ersten Abschnitt (21) umfasst, dessen Außenfläche (S21) mit einem Gewinde versehen ist und der komplementär zur Innengewindefläche (S11) des weiblichen Teils (1) ist, wobei ein zweiter Dichtungsabschnitt (22) eine Dichtfläche (S22) umfasst, die in der Kupplungskonfiguration mit der Dichtfläche (S12) des weilblichen Teils (1) zum Abdichten der Verbindung zusammenwirkt, wobei
- die innere Dichtfläche (S12) des weiblichen Teils (1) aus konischen Abschnitten (S121, S122) gebildet wird;
- die Dichtungsfläche (S22) des männlichen Teils (2) einen proximalen Abschnitt (S221), der näher an dem ersten Abschnitt (21) liegt, und einen distalen Abschnitt (S222), der näher an dem Ende (23) liegt, umfasst;
- wobei der proximale Abschnitt (S221) eine konische Oberfläche aufweist, die in der Kupplungskonfiguration eine erste Dichtung (PS) mit einem der konischen Abschnitte (S121) der inneren Dichtfläche (S12) des weiblichen Teils (1) bildet;
- wobei der distale Abschnitt (S222) eine konvexe Oberfläche (S223) aufweist, die in der Kupplungskonfiguration eine zweite Dichtung (DS) mit dem anderen konischen Abschnitt (S122) der inneren Dichtfläche (S12) des weiblichen Teils (1) bildet;
- sodass in der Kupplungskonfiguration durch die erste Dichtung (PS) und die zweite Dichtung (DS) eine doppelte Dichtung gebildet wird, wobei die erste Dichtung (PS) eine Konus-zu-Konus-Dichtung ist, die ein Eintreten von externem Druck verhindern kann, und die zweite Dichtung (DS) eine Konvex-zu-Konus-Verbindung ist, die den Abrieb verringert.

2. Gewindeverbindung gemäß Anspruch 1, wobei der Öffnungswinkel der konischen Oberfläche des proximalen Abschnitts (S221) des männlichen Teils und der Öffnungswinkel eines proximalen konischen Abschnitts (S121) des weiblichen Teils unterschiedlich sind.

3. Gewindeverbindung gemäß Anspruch 2, wobei der Winkel der konischen Oberfläche des proximalen Abschnitts (S221) größer ist als der Winkel des proximalen konischen Abschnitts (S121) des weiblichen Teils.

4. Gewindeverbindung gemäß Anspruch 3, wobei der von der Kante und der Achse des Kegelabschnitts des weiblichen Teils (1) gebildete Winkel zwischen 10° und 20° und der von der Kante und der Achse des Kegelabschnitts des proximalen Abschnitts (S221) des männlichen Teils (2) gebildete Winkel zwischen 10° und 20° liegt.

5. Gewindeverbindung gemäß einem der vorhergehenden Ansprüche, wobei die konischen Abschnitte (S121, S122) der Dichtfläche (S12) des weiblichen Teils (1) zum gleichen Kegel gehören.

6. Gewindeverbindung gemäß einem der Ansprüche 1 bis 4, wobei die konischen Abschnitte (S121, S122) der Dichtfläche (S12) des weiblichen Teils (1) einen unterschiedlichen Winkel aufweisen.

7. Gewindeverbindung gemäß einem der vorhergehenden Ansprüche, wobei die konvexe Oberfläche (S223) ein Toroidabschnitt ist.

8. Gewindeverbindung gemäß Anspruch 7, wobei der Radius eines Kreises, der den Toroidabschnitt erzeugt, zwischen 45 und 70 cm liegt und vorzugsweise 50 cm beträgt.

9. Gewindeverbindung für Öl- und Gasleitungen, wobei die Verbindung einen weiblichen Teil (1) und einen männlichen Teil (2) umfasst, wobei eine Kupplungsrichtung zwischen dem männlichen Teil (2) und dem weiblichen Teil (1) und eine Kupplungskonfiguration definiert sind, wobei der männliche Teil eine Nase (23) aufweist, wobei der weibliche Teil (1) ein rohrförmiger Verbindungskörper ist, der einen Kupplungsabschnitt (11) umfasst, dessen Innenfläche (S11) mit einem Gewinde versehen ist, wobei die Achse des röhrenförmigen Körpers die Kupplungsrichtung (CD) aufweist, einen Dichtungsabschnitt (12), der den Kupplungsabschnitt (11) in Kupplungsrichtung mit einem in Kupplungsrichtung abnehmenden Durchmesser verlängert, wobei der Dichtungsabschnitt (12) eine innere Dichtfläche (S12) und eine Schulter (13) am Ende des Dichtungsabschnitts (12) zum Anschlagen an die Nase (23) des männlichen Teils (2) in der Kupplungskonfiguration aufweist und wobei der männliche Teil (2) einen rohrförmigen Körper umfasst, der einen ersten Abschnitt (21) umfasst, dessen Außenfläche (S21) mit einem Gewinde versehen ist und der komplementär zur Innengewindefläche (S11) des weiblichen Teils (1) ist, wobei ein zweiter Dichtungsabschnitt (22) eine Dichtfläche (S22) umfasst, die in der Kupplungskonfiguration mit der Dichtfläche (S12) des weiblichen Teils (2) zum Abdichten der Verbindung zusammenwirkt, wobei die Nase (23) in der Kupplungskonfiguration an der Schulter (13) anliegt,
wobei
- die Dichtfläche (S22) des männlichen Teils (2) aus einem proximalen konischen Abschnitt (S221'), der näher am Gewinde liegt, und einem distalen Abschnitt (S222'), der näher an der Nase (23) des männlichen Teils liegt, gebildet wird;
- die innere Dichtfläche (S12) des weiblichen Teils (1) einen proximalen Abschnittsbereich (S121') näher am Gewinde und einen distalen Abschnittsbereich (S122') näher an der Schulter (13) umfasst;
- wobei der proximale Abschnittsbereich (S121') des weiblichen Teils (1) eine konische Oberfläche ist, die in der Kupplungskonfiguration eine erste Dichtung mit dem proximalen konischen Abschnitt (S221') des männlichen Teils (2) bildet;
- der distale Abschnittsbereich des weiblichen Teils (S122') eine konvexe Oberfläche (S223) aufweist, die in der Kupplungskonfiguration eine zweite Dichtung (DS) mit dem distalen Abschnitt (S222') des männlichen Teils (2) bildet;
- sodass in der Kupplungskonfiguration durch die erste Dichtung (PS) und die zweite Dichtung (DS) eine doppelte Dichtung gebildet wird, wobei die erste Dichtung (PS) eine Konus-zu-Konus-Dichtung ist, die ein Eintreten von externem Druck verhindern kann, und die zweite Dichtung (DS) eine Konvex-zu-Konus-Verbindung ist, die den Abrieb verringert.

10. Gewindeverbindung gemäß Anspruch 9, wobei der Winkel der konischen Oberfläche des proximalen konischen Abschnitts (S221') des männlichen Teils und der Winkel des proximalen Abschnitts (S121') des weiblichen Teils unterschiedlich sind.

11. Gewindeverbindung gemäß Anspruch 10, wobei der Winkel der konischen Oberfläche des proximalen Abschnittsbereichs (S121') des weiblichen Teils größer ist als der Winkel des proximalen konischen Abschnitts (S221') des männlichen Teils (2).

12. Gewindeverbindung gemäß Anspruch 9 oder Anspruch 10, wobei die konischen Abschnitte (S221', S222') der Dichtfläche (S22) des männlichen Teils (2) zum gleichen Kegel gehören.

13. Gewindeverbindung gemäß einem der Ansprüche 9 bis 12, wobei die konvexe Oberfläche (S223) ein Toroidabschnitt ist.

14. Gewindeverbindung gemäß einem der vorhergehenden Ansprüche, wobei die Schulter (13) einen abgerundeten Abschnitt, einen geraden Abschnitt oder einen gestuften Abschnitt aufweist.

15. Gewindeverbindung gemäß einem der vorhergehenden Ansprüche, wobei der weibliche Teil (1) und der männliche Teil (2) die Buchse (1) beziehungsweise der Stecker (2) einer Premiumverbindung sind.

16. Öl- oder Gasleitung mit Verbindungen gemäß einem der vorhergehenden Ansprüche.

## Revendications

1. Joint fileté pour tuyaux d'huile et de gaz, le joint comprenant une partie femelle (1) et une partie mâle (2), dans lequel une direction de couplage (CD) entre la partie mâle (2) et la partie femelle (1) et une configuration de couplage sont définies, la partie mâle ayant un nez (23), dans lequel la partie femelle (1) est un corps tubulaire de joint comprenant une section de couplage (11) dont la surface interne (S11) est filetée, l'axe du corps tubulaire ayant la direction de couplage (CD), une section de joint d'étanchéité (12) qui prolonge la section de couplage (11) dans la direction de couplage avec un diamètre décroissant dans la direction de couplage, la section de joint d'étanchéité (12) ayant une surface d'étanchéité interne (S12) et un épaulement (13) à l'extrémité de la section de joint d'étanchéité (12) pour venir en butée contre le nez (23) de la partie mâle (2) dans la configuration de couplage et dans lequel la partie mâle (2) comprend un corps tubulaire qui comprend une première section (21) dont la surface externe (S21) est filetée et qui est complémentaire de la surface interne filetée (S11) de la partie femelle (1), une seconde section d'étanchéité (22) comprenant une surface de joint d'étanchéité (S22) qui, dans la configuration de couplage, coopère avec la surface de joint d'étanchéité (S12) de la partie femelle (1) pour sceller le joint, dans lequel,
- la surface d'étanchéité interne (S12) de la partie femelle (1) est réalisée avec des sections coniques (S121, S122) ;
- la surface de joint d'étanchéité (S22) de la partie mâle (2) comprend une partie proximale (S221) plus proche de la première section (21) et une partie distale (S222) plus proche de l'extrémité (23) ;
- la partie proximale (S221) ayant une surface conique qui forme, dans la configuration de couplage, un premier joint d'étanchéité (PS) avec l'une des sections coniques (S121) de la surface d'étanchéité interne (S12) de la partie femelle (1) ;
- la partie distale (S222) ayant une surface convexe (S223) qui forme, dans la configuration de couplage, un second joint d'étanchéité (DS) avec l'autre section conique (S122) de la surface d'étanchéité interne (S12) de la partie femelle (1) ;
- de sorte que dans la configuration de couplage, un double joint d'étanchéité formé par le premier joint d'étanchéité (PS) et le second joint d'étanchéité (DS) est établi, le premier joint d'étanchéité (PS) étant un joint d'étanchéité cône sur cône qui peut empêcher l'entrée de la pression externe, le second joint d'étanchéité (DS) étant un joint d'étanchéité convexe sur cône qui réduit le grippage.

2. Joint fileté selon la revendication 1, dans lequel l'angle d'ouverture de la surface conique de la partie proximale (S221) de la partie mâle et l'angle d'ouverture d'une section conique proximale (S121) de la partie femelle sont différents.

3. Joint fileté selon la revendication 2, dans lequel l'angle de la surface conique de la partie proximale (S221) est supérieur à l'angle de la section conique proximale (S121) de la partie femelle.

4. Joint fileté selon la revendication 3, dans lequel l'angle formé par la génératrice et l'axe de la section conique de la partie femelle (1) est compris entre 10° et 20° et l'angle formé par la génératrice et l'axe de la section conique de la partie proximale (S221) de la partie mâle (2) est compris entre 10° et 20°.

5. Joint fileté selon l'une quelconque des revendications précédentes, dans lequel les sections coniques (S121, S122) de la surface d'étanchéité (S12) de la partie femelle (1) appartiennent au même cône.

6. Joint fileté selon l'une quelconque des revendications 1 à 4, dans lequel les sections coniques (S121, S122) de la surface d'étanchéité (S12) de la partie femelle (1) ont un angle différent.

7. Joint fileté selon l'une quelconque des revendications précédentes, dans lequel la surface convexe (S223) est une section toroïdale.

8. Joint fileté selon la revendication 7, dans lequel le rayon d'un cercle qui génère la section toroïdale est compris entre 45 et 70 cm, et est de préférence de 50 cm.

9. Joint fileté pour tuyaux d'huile et de gaz, le joint comprenant une partie femelle (1) et une partie mâle (2),
dans lequel une direction de couplage entre la partie mâle (2) et la partie femelle (1) et une configuration de couplage sont définies, la partie mâle ayant un nez (23), dans lequel la partie femelle (1) est un corps tubulaire de joint comprenant une section de couplage (11) dont la surface interne (S11) est filetée, l'axe du corps tubulaire ayant la direction de couplage (CD), une section de joint d'étanchéité (12) qui prolonge la section de couplage (11) dans la direction de couplage avec un diamètre décroissant dans la direction de couplage, la section de joint d'étanchéité (12) ayant une surface d'étanchéité interne (S12) et un épaulement (13) à l'extrémité de la section de joint d'étanchéité (12) pour venir en butée contre le nez (23) de la partie mâle (2) dans la configuration de couplage et dans lequel la partie mâle (2) comprend un corps tubulaire qui comprend une première section (21) dont la surface externe (S21) est filetée et qui est complémentaire de la surface interne filetée (S11) de la partie femelle (1), une seconde section d'étanchéité (22) comprenant une surface de joint d'étanchéité (S22) qui, dans la configuration de couplage, coopère avec la surface de joint d'étanchéité (S12) de la partie femelle (2) pour sceller le joint, le nez (23) qui, dans la configuration de couplage, vient en butée sur l'épaulement (13),
dans lequel,
- la surface de joint d'étanchéité (S22) de la partie mâle (2) est réalisée avec une section conique proximale (S221') plus proche du filetage, et une section distale (S222') plus proche du nez (23) de partie mâle ;
- la surface d'étanchéité interne (S12) de la partie femelle (1) comprend une partie de section proximale (S121') plus proche du filetage et une partie de section distale (S122') plus proche de l'épaulement (13) ;
- la partie de section proximale (S121') de la partie femelle (1) étant une surface conique qui forme, dans la configuration de couplage, un premier joint d'étanchéité avec la section conique proximale (S221') de la partie mâle (2) ;
- la partie de section distale de la partie femelle (S122') ayant une surface convexe (S223) qui forme, dans la configuration de couplage, un second joint d'étanchéité (DS) avec la section distale (S222') de la partie mâle (2) ;
- de sorte que dans la configuration de couplage, un double joint d'étanchéité formé par le premier joint d'étanchéité (PS) et le second joint d'étanchéité (DS) est établi, le premier joint d'étanchéité (PS) étant un joint d'étanchéité cône sur cône qui peut empêcher l'entrée de la pression externe, le second joint d'étanchéité (DS) étant un joint d'étanchéité convexe sur cône qui réduit le grippage.

10. Joint fileté selon la revendication 9, dans lequel l'angle de la surface conique de la section conique proximale (S221') de la partie mâle et l'angle de la partie de section proximale (S121') de la partie femelle sont différents.

11. Joint fileté selon la revendication 10, dans lequel l'angle de la surface conique de la partie de section proximale (S121') de la partie femelle est supérieur à l'angle de la section conique proximale (S221') de la partie mâle (2).

12. Joint fileté selon la revendication 9 ou la revendication 10, dans lequel les sections coniques (S221', S222') de la surface d'étanchéité (S22) de la partie mâle (2) appartiennent au même cône.

13. Joint fileté selon l'une quelconque des revendications 9 à 12, dans lequel la surface convexe (S223) est une section toroïdale.

14. Joint fileté selon l'une quelconque des revendications précédentes, dans lequel l'épaulement (13) a une section arrondie, une section droite ou une section étagée.

15. Joint fileté selon l'une quelconque des revendications précédentes, dans lequel la partie femelle (1) et la partie mâle (2) sont respectivement le boîtier (1) et la broche (2) d'un raccord de haute qualité.

16. Tuyau d'huile ou de gaz comprenant des joints selon l'une quelconque des revendications précédentes.
